# EUROPEAN PATENT SPECIFICATION

(11) **EP 3 947 947 B1**
(45) Date of publication and mention of the grant of the patent: **24.12.2025**
(21) Application number: 20727820.1
(22) Date of filing: 20.05.2020
(51) Int. Cl.: F02D 41/20, F02D 41/22, H01F 7/18

(54) **METHOD AND CIRCUITRY TO DETECT AND PREVENT SHORTING IN FUEL INJECTOR DRIVE CIRCUITRY**
VERFAHREN UND SCHALTUNGSANORDNUNG ZUR ERKENNUNG UND VERHINDERUNG VON KURZSCHLÜSSEN IN EINER TREIBERSCHALTUNG EINES KRAFTSTOFFEINSPRITZVENTILS
PROCÉDÉ ET CIRCUIT POUR DÉTECTER ET EMPÊCHER UN COURT-CIRCUIT DANS UN CIRCUIT DE COMMANDE D'INJECTEUR DE CARBURANT

(30) Priority: 23.05.2019 SG 10201904601R
(43) Date of publication of application: 09.02.2022
(73) Proprietor: BorgWarner US Technologies LLC, Wilmington, DE 19801 (US)
(72) Inventor: WILSON, Pang, Woodlands Drive 16 07-592 730580 SINGAPORE (SG)
(74) Representative: Office Freylinger
(86) International application number: PCT/EP2020/064048
(87) International publication number: WO 2020/234340

(56) References cited:
- DE-A1- 4 130 710
- DE-A1- 4 130 710
- DE-A1- 4 130 711
- DE-A1- 4 130 711
- JP-A- 2006 152 987
- JP-A- 2006 152 987
- JP-A- 2006 220 069
- JP-A- 2006 220 069

## Description

### TECHNICAL FIELD

This invention relates to circuitry and methods used to operate fuel injectors i.e. the actuators thereof. It has specific but not exclusive application to operation of solenoid actuators of fuel injectors. It specifically relates to circuitry and methodology to detect shorting conditions in fuel injector systems such as in fuel injector drive circuitry.

### BACKGROUND OF THE INVENTION

Circuitry (such as IC's) has been designed which is adapted to drive (e.g. Diesel) fuel injectors; to be precise fuel injector actuators such as solenoid actuators. This usually comprises associated circuitry which is controlled by an ECU, and is located between the ECU and the fuel injectors; typically this circuitry comprises of injector High and Low Side drives for drive functionality. So in other words, circuitry is typically provided to actuate fuel injectors controlled by an ECU and such drive circuitry typically provides Low and High Side drive functionality to injector actuators such as solenoids. The circuitry is typically embodied on an ASIC (application-specific integrated circuit) chip.

The High Side Drive function of such circuitry provides the requisite voltage to the injector according to the current operational injection activation profile as dictated by the ECU. This involves ramping up to a current or voltage level and thereafter may include current chopping based on requisite current level.

The Low Side Drive functionality is provided to turn on the connection to the low side terminal of an injector. Effectively Low Side driver arrangements circuitry allow e.g. selection of which injector in an injector bank of multiple injectors is driven to be driven.

The High Side Drive has the capability of a minimum "on time" of 1 µsec and minimum "off time" of 3.7µsec. So its fastest drive frequency is 212KHz although in actual Diesel injector drive applications, it only needs drive frequency below 50KHz.

So this high frequency drive capability of the injector high side drive (enable signal) referred to as (BNK[x]_HS_EN signal) can under circumstances be also a glitch, hazard and weakness in its architecture. In certain circumstances of operation, the High Side Drive output FET will eventually be damaged by the high frequency switching under short conditions e.g. at very high shorted load current.

It is an object of the invention to overcome these problems.

DE4130711A1 discloses an electromagnetic actuator driver for IC engine fuel injector. The driver has two electromagnetic valves (2) coupled in series to a power supply by a current regulator (3) and a current measuring stage (6). The valve movements are monitored by a detector (8) which provides an input to a controller (15) and to a regulator (4). In operation, the valves receive a square wave drive signal and the valve currents rises rapidly to a threshold which is held while the they fully respond. Once the valves are fully displaced the current is reduced to hold their position. JP2006220069A discloses a solenoid valve drive device. DE4130710A1 discloses a drive circuit for electromagnetic fuel injection valves. JP2006152987A discloses a solenoid valve drive mechanism.

### SUMMARY OF THE INVENTION

In one aspect is provided drive circuitry according to claim 1 of the appended claims.

In a further aspect is provided a method of determining a short condition in drive circuitry for a fuel injector actuator, according to claim 6 of the appended claims.

Particular embodiments are set out in the dependent claims.

### BRIEF DESCRIPTION OF THE DRAWINGS

The present invention is now described by way of example with reference to the accompanying drawings in which:
- Figure 1 shows circuitry of a high side and low side drive circuitry use to operate a fuel injector solenoid or other actuator;
- Figure 2 shows a schematic figure the high side circuitry of figure 1 with a protection/analytical circuit;
- Figure 3 shows normal operation plots of the circuitry of figure 1;
- Figure 4 shows a plot of various parameters in a shorted load conditions;
- Figure 5 shows one example of the invention.

### DESCRIPTION OF THE PREFERRED EMBODIMENTS

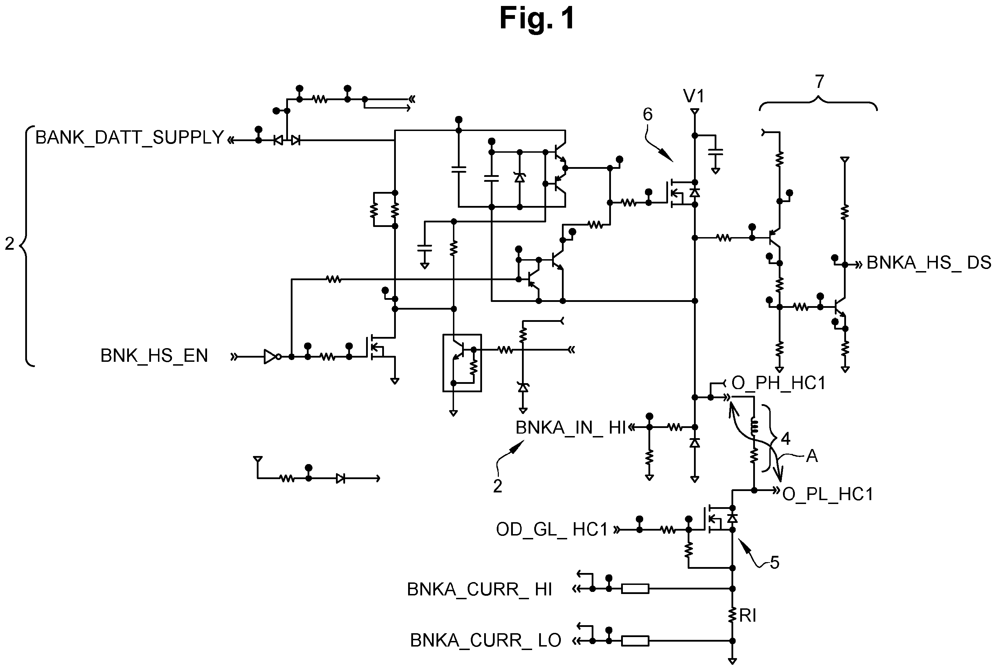

Figure 1 shows circuitry of a high side and low side drive circuitry use to operate a fuel injector solenoid or other actuator. The circuitry generally consists of a high side drive circuitry 2 and low side drive circuitry 1. A connection (voltage O_PH_HC1) from the high side circuitry is to one terminal of a load such as a fuel injector solenoid represented by coil and resistor 4 and the connection to the low side (voltage O_PL_HC1) is to the other terminal of the load.

The low side circuitry predominantly operates to select which fuel injector in a bank is operational and the low side is predominantly controlled by the input voltage GD_PL_HC1 controlling FET 5. The low side includes means to detect and e.g. provide feedback of the current by measuring the voltages BANKA_CURR_HI and BANKA_CURR_LO across resistor R1.

The high side provides the voltage levels and waveform according to the requisite activation profile. The voltage to the high side terminal is predominantly controlled via MOSFET 6 connected to supply voltage V1. Power to the gate drive for MOSFET 6 is supplied via PROTECTED_T30 terminal. The gate of this MOSFET 6 is connected to a portion of circuitry and is controlled by the high side drive enable signal BNKA_HS_EN. So in other words the high side circuitry includes a portion connected to the high side output Drive signal (BNK[x]_HS_EN).

On the right hand side of the figure is a portion of the High Side circuitry 7 connected to the high side terminal of the actuator (solenoid) 4. This include two transistors as shown and includes a connection which outputs an external signal (BNK[x]_HS_DS) from the circuitry external to ASIC, where [x] denotes the bank/injector A, so BNKA_HS_DS. So the High Side drive also includes circuitry portion 7 which is used e.g. for monitoring and which provides a voltage (signal) BNKA_HS_DS. There is also an output connection to the solenoid high side as shown which gives an output BNKA_INJ_HI.

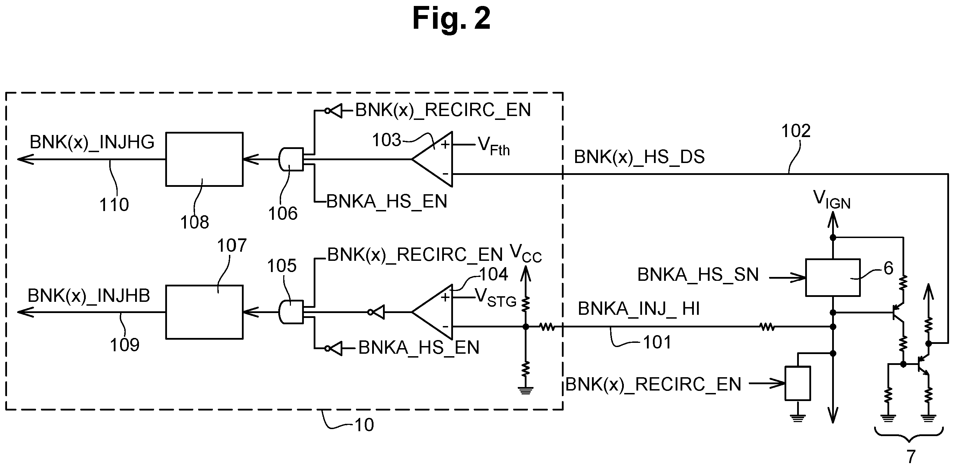

Figure 2 shows block diagrams representing the high side circuitry of Figure 1. It shows a protection/analytical circuit C2MIO 10 (not shown in Figure 1). The circuit 10 has inputs representative of voltages BNKA INJ HI and BNKA_HS_DS, described above with reference to Figure 1, from appropriate points in the HS drive circuit of Figure 1 along lines 101 and 102 respectively. Each of this is connected to a comparators 103 and 104 respectively where the input voltage is compared with reference values V_{Fth} and V_{stg} respectively. The outputs are then fed into logic circuitry along with inputs from BNKA_HS_EN and BNK[x] RECIRC_EN) which include AND gates 105 and 106 for BNKA INJ HI and BNKA_HS_DS derived inputs respectively. The output of 105 and 106 indicate possible short conditions. These outputs are fed into fault timers and 107 and 108 respectively and the outputs 109 and 110 therefrom indicate positively shorting conditions.

Figure 1 also shows a shorted load fault condition represented by arrow A i.e. it shows a Shorted Load is a fault event where the terminal of HS output is shorted to the terminal of LS output e.g. O_PH_HC1 (High Side Drive output) is shorted to O_PL_HC1 (Low Side Drive output) as shown. In Figure 1 (the High Side Drive output and Low Side Drive output shorted), the output load is bypassed with e.g. a shorted wire harness (lower impedance) and the wire harness has now become the output load.

During a shorted load, current will flow from V1 voltage through MOSFET 6 and through shorted wire harness (between O_PH_HC1 and O_PL_HC1) and to MOSFET 5 and lastly to R1 current sense resistor that is connected to Ground and this current will rise very fast (as BNKA_HS_EN goes High) and surpasses the maximum current threshold (3.2A set in the circuitry) and then decays very fast (as BNKA_HS_EN goes Low) and surpasses the minimum current threshold (1.8A set in the circuitry).

The output current, (e.g. during normal operation) will flow from V1 voltage through MOSFET 6 and through output load (coil and resistance between O_PH_HC1 and O_PL_HC1) and to MOSFET 5 and lastly to R1 current sense resistor that is connected to Ground. *This* will be measured by the circuitry in C2MIO (through current feedback (BANKA_CURR_HI ) in this case) i.e., Voltages measured at BANKA_CURR_HI will represent the output current magnitude.

During Shorted Load, O_PH_HC1 will repeatedly switch (on and off) by High Side Drive BNKA_HS_EN based on the output current feedback through voltage at BANKA_CURR_HI when BNKA_HS_DS could not detect this Shorted Load fault; when it could not detect this fault as it thinks that it is operating in normal condition (current chopping and the outputs 109 and 110 do not register faults. So the circuitry will not be able to guarantee 100% detection of Shorted Load fault as its shortest available overcurrent fault filter time is only 5.3µsec. If the High Side Drive On time is less than 5.3µsec during shorted load, this means the voltage above the fault threshold will also be shorter than 5.3µsec and causes the overcurrent mechanism in C2MIO (not being able to detect this fault and turn off the outputs.

The High Side Drive output FET 6 will eventually be damaged by the high frequency switching at very high shorted load current. An example of real application in a powertrain project is shown in Figure 2.

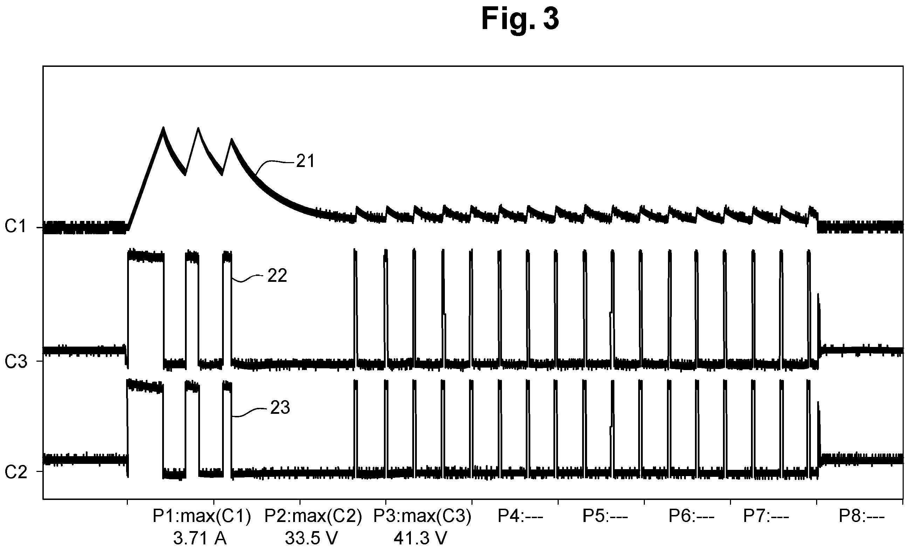

Output current (see 21 in figure 3) will flow from V1 voltage through MOSFET 6 and through output load (coil and resistance between O_PH_HC1 and O_PL_HC1) and to MOSFET 5 and lastly to R1 current sense resistor that is connected to Ground. Gate O_PH_HC1 = Gate of MOSFET 6. O_PH_HC1 = High Side Drive Output terminal. Figure 3 shows normal operation plot with switching frequency at about 500Hz with showing the plot of output (SV) current 21 Gate O_PH_HC1 voltage 22 (gate of MOSFET 6) and O_PH_HC1 voltage 23

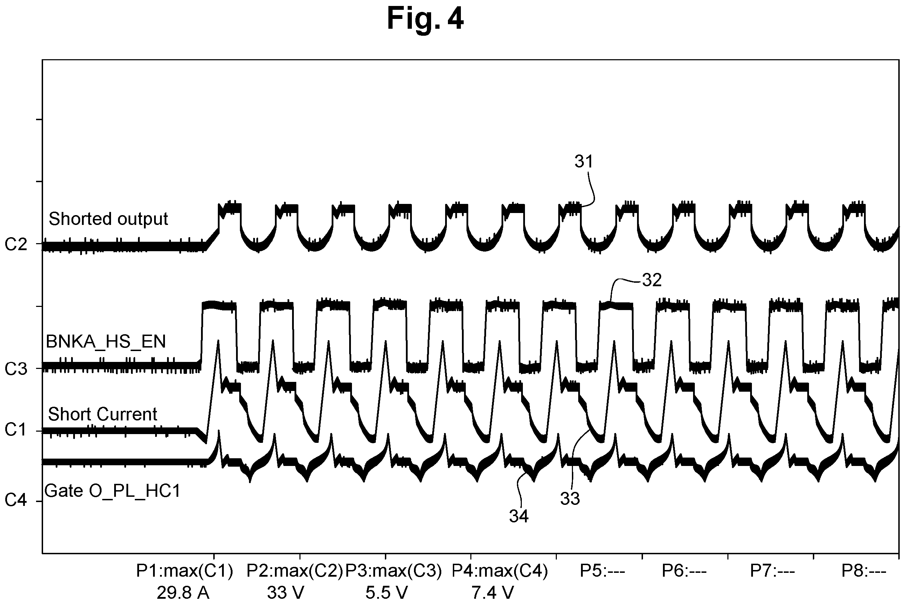

Figure 4 shows a plot of various parameters in a shorted load conditions and shows plot 31 which is the shorted output (SV) current, plot 32 shows the BNKA HS EN voltage, plot 33 shows the short current and 34 shows the voltage at gate O_PL_HC1. Plot 31 is Shorted Output Voltage. Plot 33 is Shorted Output Current. During Shorted Load, electrical current will flow from V1 voltage through MOSFET 6 and through shorted wire harness (between O_PH_HC1 and O_PL_HC1) and to MOSFET 5 and lastly to R1 current sense resistor that is connected to Ground.

BNKA_HS_EN "On time" is very short at 4usec (<5.3usec fault time) and very high frequency 143KHz. So the prior art system of figure 2 cannot detect this fault and will continue to switch.

### Invention

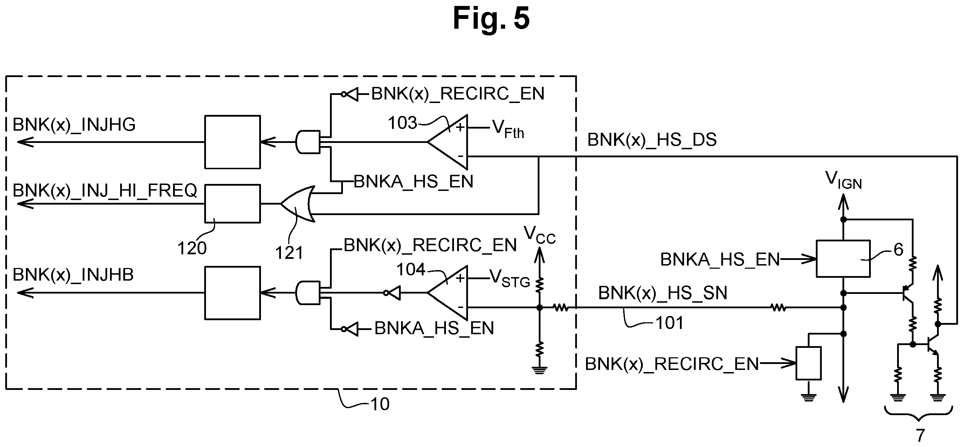

The problem of hardware damaged during Shorted Load conditions is solved by having a High Frequency Switching Detection Module 120 (e.g. in the ASIC) as shown in Figure 5. The module is able to monitor the High Side Drive voltages/signals e.g. internally in ASIC for example (BNK[x]_HS_EN) in this case (so for injector A, BNKA_HS_EN) , also known as the high side drive enable signal). It can also monitor the external signal (BNK[x]_HS_DS) from the circuitry external to ASIC, so BNKA_HS_DS for injector A.

In the figure these two signals are ORed by OR gate 121 and the signal(s) fed into the High Frequency Switching Detection Module 120 (either one of the signals high frequency switching can be detected). In an alternative schematic, the system can be regarded as either BNK_HS_EN and /or the BNK[x]_HS_DS signals going into the module 120. Module 120 determines the frequency of the input signal (either BNK_HS_EN and /or the BNK[x]_HS_DS signals) and compares with pre-stored frequency threshold(s). If the frequency is higher than the threshold then a shorted load condition is flagged.

So e.g. when abnormal high frequency switching happens on High Side Drive signal BNK[x]_HS_EN or High Side Drive output Drain Feedback (BNK[x]_HS_DS), this module 120 will measure the switching frequency and shall compare it with the normal operation switching frequency measured earlier.

The frequency module essentially compare the frequency component of the BNK[x] HS_DB and/or INJ_HI signal and compares these with set or programmable threshold(s) of frequency; this gives flexibility to design engineer to select the frequency threshold to be set in the ASIC depending on the product application needs and requirements.

When the ASIC detected that the high side drive switching frequency higher than the frequency threshold set in ASIC, it shall stop the high side drive switching immediately and latch a high frequency switching fault until a command to clear this fault and re-enable the high side drive is received by the ASIC.

This solution is robust as it can turn off the ASIC drive hardware almost immediately when Shorted Load/high frequency switching happened and latch the high frequency switching fault till the MicroP (software) started to retry (re-enable) the output.

The advantage of this solution is that the ASIC is able to turn off its own injector output based on internal switching signal or external output signal. This High Frequency Switching Detection Module shall be independent from other diagnostics module. Therefore, any output oscillation or Shorted Load fault event is 100% detectable and ensure 100% hardware protection as compared to existing Overcurrent mechanism in C2MIO which does not guarantee 100% detectable fault and 100% hardware protection.

The High Frequency Switching Detection module could be integrated in ASIC as shown below to detect and confirm the validity of the high frequency switching fault.

The table below is an example of high frequency threshold setting choices that could be made available for design/application engineers (ASIC users).

| High Frequency fault register settings [1:0] | Frequency Threshold (KHz) | Comments |
|---|---|---|
| 00 | 50 | Note: output switching at frequency higher than this selected frequency threshold will result in a high frequency fault detected by ASIC. |
| 01 | 75 | |
| 10 | 100 | |
| 11 | 150 | |

## Claims

1. Drive circuitry for a fuel injector actuator, said drive circuitry including a High Side Drive portion and a Low Side Drive portion, and including determination means to determine a short condition, said determination means adapted to perform a frequency analysis of a voltage(s) or a voltage signal at, or from, one or more points in the High Side Drive, and to determine if a faulty short condition exists based on said analysis,
where said determination means is adapted to perform the frequency analysis of a voltage(s) by being adapted to compare a frequency of the voltage with a stored frequency value, and output a signal indicative of a faulty short condition dependent on said comparison,
wherein said voltage is the voltage of the High Side Drive Enable Signal; and
the drive circuitry is adapted to stop high side drive switching if a fault condition is determined.

2. Drive circuitry as claimed in claim 1 wherein said determination means comprises a High Frequency Switching Detection Module (120) configured to receive at the input thereof the output of an OR gate (121), the OR gate (121) receiving at respective inputs thereof the High Side Drive Enable Signal and a High Side Drive output Drain Feedback signal; wherein said voltage is the voltage of the High Side Drive Enable Signal or the High Side Drive output Drain Feedback signal.

3. Drive circuitry as claimed in claim 1 or 2 wherein said determination means is adapted to determine that a short condition exists if said voltage frequency is higher than said stored frequency value, or higher than the stored frequency value plus a tolerance threshold wherein said stored frequency value and/or tolerance threshold is variable and/or programmable.

4. Drive circuitry as claimed in claim 3 wherein said stored frequency value and/or tolerance threshold is variable and/or programmable and set according to operating conditions of the injector or type of fuel injector and/or fuel injector actuator.

5. Drive circuitry as claimed in claims 3 or 4 wherein the stored frequency value is the operational switching frequency measured at an earlier time-point.

6. A method of determining a short condition in drive circuitry for a fuel injector actuator, said drive circuitry including a High Side Drive portion and a Low Side Drive Portion, comprising:
performing a frequency analysis of a voltage(s) or a voltage signal at, or from, one or more points in the High Side Drive by comparing a frequency of the voltage with a stored frequency value, where said voltage is the voltage of the High Side Drive Enable Signal;
determining if a faulty short condition exists based on said frequency analysis;
outputting a signal indicative of a faulty short condition dependent on said determination; and
stopping high side drive switching if a fault condition is determined.

7. A method as claimed in claim 6 where step a) comprises determining if said frequency is higher than said stored frequency value, or higher than the stored frequency value plus a tolerance threshold wherein said stored frequency value and/or tolerance threshold is variable and/or programmable.

8. A method as claimed in claim 7 wherein said stored frequency value and/or tolerance threshold is variable and/or programmable and set according to operating conditions of the injector or type of fuel injector and/or fuel injector actuator.

9. A method as claimed in claims 7 or 8 where the stored frequency value is the operational switching frequency measured at an earlier time-point.

## Patentansprüche

1. Treiberschaltkreis für einen Kraftstoffeinspritzventilaktuator, wobei der Treiberschaltkreis einen Treiberabschnitt auf der Hochspannungsseite und einen Treiberabschnitt auf der Niederspannungsseite einschließt und Bestimmungsmittel einschließt, um eine Kurzschlussbedingung zu bestimmen, wobei die Bestimmungsmittel dazu geeignet sind, eine Frequenzanalyse einer Spannung (von Spannungen) oder eines Spannungssignals an, oder von, einer oder mehreren Stellen in dem Treiber auf der Hochspannungsseite vorzunehmen und basierend auf dieser Analyse zu bestimmen, ob eine fehlerhafte Kurzschlussbedingung vorliegt,
wobei die Bestimmungsmittel dazu geeignet sind, die Frequenzanalyse einer Spannung (von Spannungen) vorzunehmen, indem sie dazu geeignet sind, eine Frequenz der Spannung mit einem gespeicherten Frequenzwert zu vergleichen und ein Signal auszugeben, das abhängig von dem Vergleich eine fehlerhafte Kurzschlussbedingung angibt,
wobei die Spannung die Spannung des Treiberfreigabesignals auf der Hochspannungsseite ist; und
der Treiberschaltkreis dazu geeignet ist, das Treiberschalten auf der Hochspannungsseite zu stoppen, sofern eine Fehlerbedingung bestimmt wird.

2. Treiberschaltkreis nach Anspruch 1, wobei die Bestimmungsmittel ein Hochfrequenz-Schalterkennungsmodul (120) umfassen, das dafür konfiguriert ist, an seinem Eingang die Ausgabe eines ODER-Gatters (121) zu empfangen, wobei das ODER-Gatter (121) an seinen jeweiligen Eingängen das Treiberfreigabesignal auf der Hochspannungsseite und ein Drain-Rückkopplungssignal als Treiberausgabe auf der Hochspannungsseite empfängt; wobei die Spannung die Spannung des Treiberfreigabesignals auf der Hochspannungsseite oder das Drain-Rückkopplungssignal als Treiberausgabe auf der Hochspannungsseite ist.

3. Treiberschaltkreis nach Anspruch 1 oder 2, wobei die Bestimmungsmittel dazu geeignet sind, zu bestimmen, dass eine Kurzschlussbedingung vorliegt, sofern die Spannungsfrequenz höher als der gespeicherte Frequenzwert oder höher als der gespeicherte Frequenzwert plus ein Toleranzschwellenwert ist, wobei der gespeicherte Frequenzwert und/oder der Toleranzschwellenwert variabel und/oder programmierbar ist.

4. Treiberschaltkreis nach Anspruch 3, wobei der gespeicherte Frequenzwert und/oder Toleranzschwellenwert variabel und/oder programmierbar ist und gemäß Betriebsbedingungen des Einspritzventils oder der Art von Kraftstoffeinspritzventil und/oder von Kraftstoffeinspritzventilaktuator eingestellt ist.

5. Treiberschaltkreis nach Anspruch 3 oder 4, wobei der gespeicherte Frequenzwert die betriebsmäßige Schaltfrequenz, gemessen zu einem früheren Zeitpunkt, ist.

6. Verfahren zum Bestimmen einer Kurzschlussbedingung in dem Treiberschaltkreis für einen Kraftstoffeinspritzventilaktuator, wobei der Treiberschaltkreis einen Treiberabschnitt auf der Hochspannungsseite und einen Treiberabschnitt auf der Niederspannungsseite einschließt, umfassend:
Vornehmen einer Frequenzanalyse einer Spannung (von Spannungen) oder eines Spannungssignals an, oder von, einer oder mehreren Stellen in dem Treiber auf der Hochspannungsseite durch Vergleichen einer Frequenz der Spannung mit einem gespeicherten Frequenzwert, wobei die Spannung die Spannung des Treiberfreigabesignals auf der Hochspannungsseite ist;
basierend auf dieser Frequenzanalyse, Bestimmen, ob eine fehlerhafte Kurzschlussbedingung vorliegt,
abhängig von der Bestimmung, Ausgeben eines Signals, das eine fehlerhafte Kurzschlussbedingung angibt; und
Stoppen des Treiberschaltens auf der Hochspannungsseite, sofern eine Fehlerbedingung bestimmt wird.

7. Verfahren nach Anspruch 6, wobei Schritt a) das Bestimmen umfasst, ob die Frequenz höher als der gespeicherte Frequenzwert oder höher als der gespeicherte Frequenzwert plus ein Toleranzschwellenwert ist, wobei der gespeicherte Frequenzwert und/oder der Toleranzschwellenwert variabel und/oder programmierbar ist.

8. Verfahren nach Anspruch 7, wobei der gespeicherte Frequenzwert und/oder Toleranzschwellenwert variabel und/oder programmierbar ist und gemäß Betriebsbedingungen des Einspritzventils oder der Art von Kraftstoffeinspritzventil und/oder von Kraftstoffeinspritzventilaktuator eingestellt wird.

9. Verfahren nach Anspruch 7 oder 8, wobei der gespeicherte Frequenzwert die betriebsmäßige Schaltfrequenz, gemessen zu einem früheren Zeitpunkt, ist.

## Revendications

1. Circuit de commande pour un actionneur d'injecteur de carburant, ledit circuit de commande comportant une partie de Commande Côté Haut et une partie de Commande Côté Bas, et comportant des moyens de détermination pour déterminer une condition de court-circuit, lesdits moyens de détermination étant adaptés pour effectuer une analyse de fréquence d'une ou de plusieurs tension(s) ou d'un signal de tension au niveau de, ou depuis, un ou plusieurs point(s) dans la Commande Côté Haut, et pour déterminer si des conditions de court-circuit défectueuses existent sur la base de ladite analyse,
où lesdits moyens de détermination sont adaptés pour effectuer l'analyse de fréquence d'une ou de plusieurs tension(s) en étant adaptés pour comparer une fréquence de la tension à une valeur de fréquence stockée, et pour délivrer en sortie un signal indicatif d'une condition de court-circuit défectueuse en fonction de ladite comparaison,
dans lequel ladite tension est la tension du Signal d'Activation de Commande Côté Haut ; et
le circuit de commande est adapté pour arrêter la commutation de commande côté haut si une condition de défaut est déterminée.

2. Circuit de commande selon la revendication 1, dans lequel lesdits moyens de détermination comprennent un Module de Détection de Commutation Haute Fréquence (120) configuré pour recevoir au niveau de son entrée la sortie d'une porte OU (121), la porte OU (121) recevant au niveau d'entrées respectives de celle-ci le Signal d'Activation de Commande Côté Haut et un signal de Rétroaction de Drain de sortie de Commande Côté Haut ; dans lequel ladite tension est la tension du Signal d'Activation de Commande Côté Haut ou le signal de Rétroaction de Drain de sortie de Commande Côté Haut.

3. Circuit de commande selon la revendication 1 ou 2, dans lequel lesdits moyens de détermination sont adaptés pour déterminer qu'une condition de court-circuit existe si ladite fréquence de tension est supérieure à ladite valeur de fréquence stockée, ou supérieure à la valeur de fréquence stockée plus un seuil de tolérance, dans lequel ladite valeur de fréquence stockée et/ou ledit seuil de tolérance est/sont variable(s) et/ou programmable(s).

4. Circuit de commande selon la revendication 3, dans lequel ladite valeur de fréquence stockée et/ou ledit seuil de tolérance est/sont variable(s) et/ou programmable(s) et réglé(s) selon les conditions de fonctionnement de l'injecteur ou le type d'injecteur de carburant et/ou d'actionneur d'injecteur de carburant.

5. Circuit de commande selon les revendications 3 ou 4, dans lequel la valeur de fréquence stockée est la fréquence de commutation opérationnelle mesurée à un instant antérieur.

6. Procédé de détermination d'une condition de court-circuit dans un circuit de commande pour un actionneur d'injecteur de carburant, ledit circuit de commande comportant une partie de Commande Côté Haut et une partie de Commande Côté Bas, comprenant :
la réalisation d'une analyse de fréquence d'une ou de plusieurs tension(s) ou d'un signal de tension au niveau de, ou depuis, un ou plusieurs point(s) dans la Commande Côté Haut en comparant une fréquence de la tension à une valeur de fréquence stockée, où ladite tension est la tension du Signal d'Activation de Commande Côté Haut ;
la détermination qu'une condition de court-circuit défectueuse existe sur la base de ladite analyse de fréquence ;
la délivrance en sortie d'un signal indicatif d'une condition de court-circuit défectueuse en fonction de ladite détermination ; et
l'arrêt de la commutation de commande côté haut si une condition de défaut est déterminée.

7. Procédé selon la revendication 6, où l'étape a) comprend la détermination que ladite fréquence est supérieure à ladite valeur de fréquence stockée, ou supérieure à la valeur de fréquence stockée plus un seuil de tolérance, dans lequel ladite valeur de fréquence stockée et/ou ledit seuil de tolérance est/sont variable(s) et/ou programmable(s).

8. Procédé selon la revendication 7, dans lequel ladite valeur de fréquence stockée et/ou ledit seuil de tolérance est/sont variable(s) et/ou programmable(s) et réglé(s) selon les conditions de fonctionnement de l'injecteur ou le type d'injecteur de carburant et/ou d'actionneur d'injecteur de carburant.

9. Procédé selon les revendications 7 ou 8, où la valeur de fréquence stockée est la fréquence de commutation opérationnelle mesurée à un instant antérieur.
